# EUROPEAN PATENT SPECIFICATION

(11) **EP 3 898 905 B1**
(45) Date of publication and mention of the grant of the patent: **01.05.2024**
(21) Application number: 19839272.2
(22) Date of filing: 20.12.2019
(51) Int. Cl.: B09B 3/40, C10L 5/44, C10L 9/08, B09B 3/00, C10B 53/02

(54) **PLANT AND PROCESS FOR THE TRANSFORMATION OF BIOMASS**
ANLAGE UND VERFAHREN ZUR TRANSFORMATION VON BIOMASSE
INSTALLATION ET PROCÉDÉ DE TRANSFORMATION DE BIOMASSE

(30) Priority: 20.12.2018 IT 201800020320
(43) Date of publication of application: 27.10.2021
(73) Proprietor: HBI S.r.l., 39100 Bolzano BZ (IT)
(72) Inventor: BASSO, Daniele, 39054 Renon (BZ) (IT); PAVANETTO, Renato, 31055 Quinto Di Treviso (TV) (IT)
(74) Representative: Soranzo, Benedetta
(86) International application number: PCT/IB2019/061188
(87) International publication number: WO 2020/129001

(56) References cited:
- WO-A1-2016/192404
- CN-A- 103 386 411
- DE-A1-102010 000 578

## Description

The present invention refers to a plant and a process for the transformation of biomass into hydrochar. More particularly, it refers to a plant and a process for an efficient transformation of biomass into hydrochar that is an exploitable material for various uses.

As it is known, it is possible to transform biomass into hydrochar that is a solid material with a high content of carbon deriving from the transformation of biomass by a thermochemical process in the presence of pressurized hot water.

The aforementioned material can be usefully exploited in various ways: this material is used, for example, as a solid fuel, a catalyst or a soil conditioner.

Usually, the transformation of biomass into hydrochar occurs in reactors in which a certain quantity of biomass is placed with a water content greater than 60% and/or a sufficient water content to ensure that the biomass is completely immersed in the water. This biomass is brought and maintained at a temperature between 180 and 250°C and at a pressure higher than the vapor tension of water at those temperatures (therefore, usually between 10 and 50 bar) for a time interval generally but not exclusively between 3 and 8 hours, depending on the chemical characteristics of the biomass.

At the time of the unloading of the so-obtained material, it is necessary to return the system to the ambient temperature, for example through a pressure decrease, with a consequent rapid drop in temperature, precisely from the process temperature to about 100°C, resulting in a partial evaporation of the water.

CN 103 386 411 A and DE 10 2010 000578 A1 disclose respective known plants.

The main problem of the prior art concerns, therefore, the big energy losses because the energy spent to bring the biomass to the desired temperature inside the reactor is then lost upon unloading.

An object of the present invention is to provide a plant for the transformation of biomass into hydrochar that operates efficiently.

Another object of the invention is to obtain a plant for the transformation of biomass into hydrochar, in which the energy losses are substantially reduced in the unloading phases of the obtained hydrochar.

All said objects and advantages are achieved according to the invention through a process according to claim 1 to transform biomass into hydrochar by means of a plant comprising:
- a first reactor, a second reactor, a third reactor into which biomass can be loaded from the outside and hydrochar can be unloaded from the plant to the outside;
- a fourth reactor, a fifth reactor and a sixth reactor in which the transformation of biomass into hydrochar can take place at a process temperature between 180°C and 250°C, at a process pressure corresponding or higher than the vapor tension of water at the process temperature, that is between 10 bar and 50 bar, in a time span equal to the reaction time between 3 and 8 hours;
- a heat exchanger through which the first reactor, the second reactor, the third reactor are indistinctly connected to the fourth reactor, the fifth reactor and the sixth reactor.

In the plant the first reactor, the second reactor, the third reactor, the fourth reactor, the fifth reactor and the sixth reactor are connected to each other also directly.

In particular, the process according to the invention provides at the initial state that:
- the first reactor is full of hydrochar, process water and gas created during the reaction (from now on, these three substances are defined, as a whole, as "process products") and is pressurized at the process pressure and at an unloading temperature between 30°C and 50°C;
- the second reactor is full of biomass and water or liquid formed downstream of the process, recirculated partly or totally (from now on, these substances are defined, as a whole, as "feedstock") and is pressurized at the process pressure;
- the third reactor is empty and is pressurized at the process pressure;
- the fourth reactor is full of process products, is pressurized at the process pressure and is at a reaction temperature;
- the fifth reactor is empty and is pressurized at a process pressure;
- the sixth reactor is full of feedstock, is pressurized at the process temperature and is partially heated at a temperature between 160°C and 210°C;

The process provides for a first cycle in which, simultaneously:
- the first reactor, in succession, is isolated from the rest of the plant, is depressurized at the atmospheric pressure, is emptied of the process products contained in it, is loaded with feedstock, and is, finally, pressurized at the process pressure;
- the process products contained in the fourth reactor are transferred into the third reactor passing through the heat exchanger in countercurrent with the feedstock passing through the heat exchanger which is transferred from the second reactor to the fifth reactor, so as to transfer heat from the process products to the feedstock;
- the air contained in the third reactor and the fifth reactor is transferred into the second reactor and the fourth reactor, respectively;
- in the sixth reactor, the feedstock is brought to the reaction temperature, in which the reaction as well as the transformation into hydrochar and in the other process products take place.

Advantageously, the process according to the invention, may provide that at the end of the first cycle, a second cycle is performed in which, simultaneously, the operation of the first reactor during the first cycle is performed by the third reactor, the operation of the second reactor during the first cycle is performed by the first reactor, the operation of the third reactor during the first cycle is performed by the second reactor, the operation of the fourth reactor during the first cycle is performed by the sixth reactor, the operation of the fifth reactor during the first cycle is performed by the fourth reactor and the operation of the sixth reactor during the first cycle is performed by the fifth reactor.

Besides, the process according to the invention may provide that at the end of the second cycle, a third cycle is performed in which, simultaneously, the operation of the first reactor during the first cycle is performed by the second reactor, the operation of the second reactor during the first cycle is performed by the third reactor, the operation of the third reactor during the first cycle is performed by the first reactor, the operation of the fourth reactor during the first cycle is performed by the fifth reactor, the operation of the fifth reactor during the first cycle is performed by the sixth reactor and the operation of the sixth reactor during the first cycle is performed by the fourth reactor.

Through the process according to the invention it is possible to obtain hydrochar and the other process products more efficiently than in the prior art.

This efficiency is obtained by decoupling the three characteristic times of the thermochemical process of transformation of biomass in the presence of pressurized hot water, namely:
1. the feeding time of the feedstock and unloading of the process products (time 1);
2. the process time (generally but not exclusively 3 to 8 hours) (time 2);
3. the heat exchange time between incoming feedstock and outgoing process products (time 3).

In fact, with the process according to the invention it is possible to ensure a continuous operation of the plant, in terms of feeding and unloading (time1), regardless of the process time (time 2) and regardless of the time it takes for the heat exchanger to complete a heat exchange in countercurrent (time 3).

Accordingly, the high heat exchange efficiencies obtainable by decoupling the heat exchange time (time 3) from the other two characteristic times of the system involve a clear reduction in operating costs directly related to the supply of thermal energy necessary for bringing, at each cycle, the feedstock from the ambient temperature to the process temperature.

In this way, the heat exchanger has all the time necessary for a complete heat exchange (time 3), not affecting minimally neither the reaction time (time 2), nor the loading/unloading time (time 1).

In comparison with the conventional present technical solutions implementing the thermochemical process for the transformation of biomass, the process according to the invention allows to obtain much more advantageous operating costs and less waste of energy.

Advantageously, in the process according to the invention, the changes in level within the plant can be managed by means of an expansion vessel.

The objects and advantages of the invention are also achieved by means of a plant according to claim 6 to transform biomass into hydrochar, comprising:
- a first reactor, a second reactor, a third reactor into which feedstock is loaded from the outside and the process products are unloaded from the plant to the outside;
- a fourth reactor, a fifth reactor and a sixth reactor in which the transformation of biomass into process products takes place at a process temperature between 180°C and 250°C, at a process pressure corresponding or higher than the vapor tension of the water at the process temperature, that is between 10 bar and 50 bar, in a time span equal to the reaction time, generally but not exclusively between 3 and 8 hours;
- a heat exchanger through which the first reactor, the second reactor, the third reactor are indistinctly connected to the fourth reactor, the fifth reactor and the sixth reactor;
the first reactor, the second reactor, the third reactor, the fourth reactor, the fifth reactor and the sixth reactor being connected also directly to one another.

Besides, the plant according to the invention may include a loading/unloading pump, suitable for loading feedstock or unloading the process products into/from at least one of the first reactor, the second reactor, the third reactor, the fourth reactor, the fifth reactor and the sixth reactor.

Advantageously, a feed pump may be included, suitable for performing the pressurization in at least one of the first reactor, the second reactor, the third reactor, the fourth reactor, the fifth reactor and the sixth reactor.

Besides, in the plant according to the invention an expansion vessel may be included, suitable for managing the level changes within the plant.

Advantageously, at least one of the first reactor, the second reactor, the third reactor may be a tank, so as to reduce the costs of the entire plant.

Further features and details of the invention can be better understood from the following specification that is supplied by way of a non-limiting example as well as from the annexed drawings, wherein:

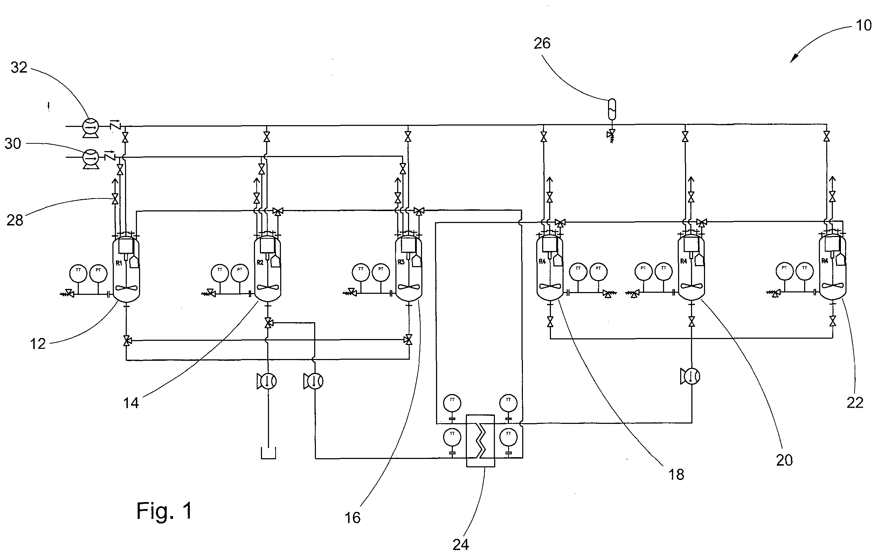

Figure 1 is a schematic view of a plant for the transformation of biomass into hydrochar, the plant being made according to the invention;
Figure 2 is a diagram illustrating the operation of the plant in Figure 1;
Figure 3 is a summary caption that explains the signs present in the diagram in Figure 2.

With reference to the attached figures, reference number 10 denotes a plant for the transformation of biomass into hydrochar.

The plant 10 according to the invention includes six reactors 12, 14, 16, 18, 20, 22 which have the same capacity and are connected to one another and to a heat exchanger 24 as well as to a gas (air) expansion vessel 26.

Specifically, the plant 10 includes a first reactor 12, a second reactor 14 and a third reactor 16 in which the loading and unloading of feedstock and process products take place between the plant and the outside, respectively, as well as a fourth reactor 18, a fifth reactor 20 and a sixth reactor 22 in which the reaction takes place, that is the transformation of feedstock into process products.

In the fourth reactor 18, the fifth reactor 20 and the sixth reactor 22, the reaction conditions of the material are the same as those provided by the prior art, in which the production does not take place in continuous mode, that is the temperature is 220°C, the pressure is 20 bar and the reaction time is about 3 hours.

Of course, the process temperature can be different from 220°C, that is, the temperature can be between 180°C and 250°C, the pressure can be different from 20 bar, but in any case it has to correspond with or be higher than the vapor tension of the water at the process temperature, and the time may be longer than 3 hours.

The heat exchanger 24 operates in counter-current and with high efficiency.

The entire plant 10, that is, all the six reactors 12, 14, 16, 18, 20, 22 and the heat exchanger 24, are always kept at the reaction pressure, that is, a pressure of 20 bar.

Any variations in level are managed by means of the gas (air) expansion vessel 26.

The loading and unloading of the material, feedstock and process products are performed at atmospheric pressure, isolating the single reactor, specifically the first reactor 12, the second reactor 14 and the third reactor 16 which according to the present embodiment mode, are the reactors responsible for loading and unloading the materials.

The re-pressurization is carried out individually via a feed pump 32 in the absence of gas (air), thus compressing only the fluid.

In general terms, the operating procedure of the plant 10 provides a series of continuous cycles and each cycle lasts 3 hours.

However, the reaction time can be different from 3 hours and is determined according to the type of feedstock and/or the chemical-physical characteristics of the process products to be obtained, that is generally but not exclusively 3 to 8 hours.

In one of the last three reactors, and specifically by rotation the fourth reactor 18, the fifth reactor 20 and the sixth reactor 22, the reaction of transformation of the biomass into hydrochar takes place.

In particular, in each of the reactors 18, 20, 22 in which the reaction and the consequent transformation of the biomass into hydrochar take place by rotation, in a first phase of the cycle, in a limited time, the material is brought to the nominal temperature, that is to 220°C, the material being exiting the heat exchanger 24, and subsequently the reaction takes place.

In one of the first three reactors, and specifically by rotation the first reactor 12, the second reactor 14 and the third reactor 16, material is unloaded and loaded with the outside, specifically the feedstock is loaded and the process products are unloaded.

In particular, each of the reactors 12, 14, 16 in which the unloading and loading takes place by rotation, is first isolated from the rest of the plant 10 and its internal pressure is lowered until it is equal to the atmospheric pressure. First, the reactor is unloaded of the process products and subsequently is loaded with feedstock. The loaded material is brought to the nominal reaction pressure, that is to 20 bar, and finally, the reactor in question is brought back into communication with the rest of the plant 10.

The remaining four reactors perform the heat exchange with the transfer of heat by the mixture composed of the process products, at the end of the reaction, that is at the end of the cycle, towards the incoming feedstock, that is at the beginning of the cycle. The reactors are emptied and filled two by two through a transfer of material in equi-pressure, that is the nominal reaction pressure of 20 bar.

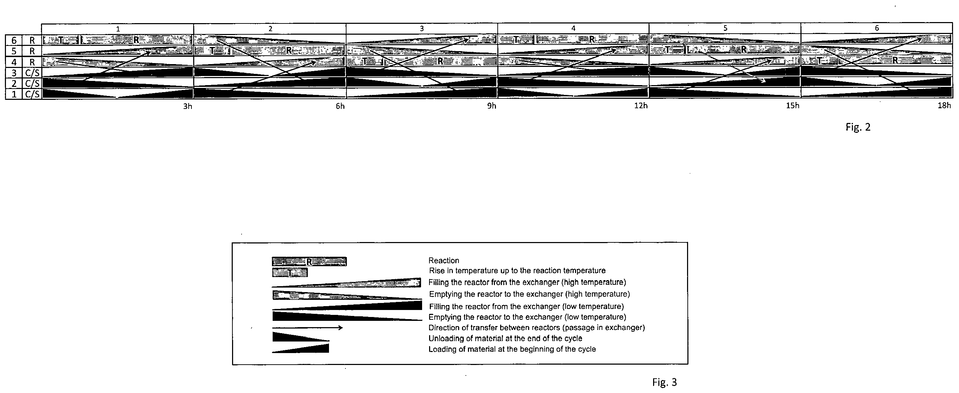

Now, the operation of the plant 10 in the first cycle is described in detail with reference to Figures 2 and 3.

In the initial state of the first cycle, the first reactor 12 is full of process products ready to be unloaded, and is pressurized. In other words, the first reactor 12 is loaded with process products at a temperature of 40°C and a pressure of 20 bar.

The second reactor 14 is full of feedstock, and is pressurized and is therefore at the pressure of 20 bar.

The third reactor 16 is empty and pressurized and is therefore at the pressure of 20 bar.

The fourth reactor 18 is full of process products at the end of the reaction and is therefore at a temperature of 220°C and a pressure of 20 bar.

The fifth reactor 20 is empty and pressurized and is therefore at the pressure of 20 bar.

The sixth reactor 22 is full of feedstock, partially heated, to a temperature of about 200°C, and pressurized and is therefore at a pressure of 20 bar.

Within the first cycle, the following operations take place.

The process products contained in the fourth reactor 18 are passed inside the heat exchanger 24 in counter-current to transfer the heat to the feedstock contained in the second reactor 14; in this way, the process products are transferred to the third reactor 16 and the feedstock is transferred to the fifth reactor 20.

The pressure inside the five reactors 14, 16, 18, 20, 22 (that is all reactors except the first reactor 12) is kept constant, that is at 20 bar, the six reactors being connected in parallel.

The air contained in the third reactor 16 and the fifth reactor 20 that were previously empty is discharged into the second reactor 14 and fourth reactor 18, respectively, which were emptied of the respective material.

The reaction of the feedstock takes place in the sixth reactor 22; in other words, the feedstock, which is heated partially initially, is brought to the reaction temperature, that is to 220°C.

The unloading and loading of material takes place in the first reactor 12. Precisely, the first reactor 12 is isolated from the rest of the plant 10 and subsequently depressurized to atmospheric pressure through a first valve 28. The process products are unloaded from the first reactor 12 at atmospheric pressure through a first loading/unloading pump 30. The estimated time required for the unloading operations is equal to approximately half of the cycle time that is about 1.5 hours.

Subsequently, the feedstock is loaded at atmospheric pressure into the same first reactor 12 by means of the first loading/unloading pump 30. The estimated time required for the loading operations is equal to approximately half of the cycle time that is about 1.5 hours.

Then, the first reactor 12 is pressurized at the nominal pressure of the plant 10, that is to 20 bar, by means of the feed pump 32.

Finally, the first reactor 12 is reconnected to the plant 10.

At the end of the first cycle, the first reactor 12 is full of material to transform, that is feedstock, and is pressurized at the nominal pressure of the plant, that is 20 bar.

The second reactor 14 is empty and pressurized at the nominal pressure of the plant.

The third reactor 16 is full of process products ready to be unloaded and is pressurized. In particular, the hydrochar in the third reactor 16 is at a temperature of 40°C and a pressure of 20 bar.

The fourth reactor 18 is full of initial feedstock, partially heated at a temperature of 200°C and is pressurized at the nominal value, that is 20 bar.

The fifth reactor 20 is empty and pressurized at the nominal pressure of the plant.

The sixth reactor 22 is full of process products and is pressurized at the nominal pressure value.

Subsequently, the second cycle proceeds with material displacements and transformations similar to those described above but with operation of different reactors.

In the second cycle, concerning the first three reactors 12, 14, 16 in which the unloading and loading of material takes place, the operation of the first reactor 12 is performed by the third reactor 16, the operation of the second reactor 14 is performed by the first reactor 12 and the operation of the third reactor 16 is performed by the second reactor 14.

Concerning the second three reactors 18, 20, 22 in which the reaction with transformation of biomass into hydrochar takes place, the operation of the fourth reactor 18 is performed by the sixth reactor 22, the operation of the fifth reactor 20 is performed by the fourth reactor 18 and the operation of the sixth reactor 22 is performed by the fifth reactor 20.

In the third cycle, concerning the first three reactors 12, 14, 16 in which the unloading and loading of material takes place, the operation in the first cycle of the first reactor 12 is performed by the second reactor 14, the operation in the first cycle of the second reactor 14 is performed by the third reactor 16 and the operation in the first cycle of the third reactor 16 is performed by the first reactor 12.

Concerning the second three reactors 18, 20, 22 in which the reaction with transformation of biomass into hydrochar takes place, the operation in the first cycle of the fourth reactor 18 is performed by the fifth reactor 20, the operation in the first cycle of the fifth reactor 20 is performed by the sixth reactor 22 and the operation in the first cycle of the sixth reactor 22 is performed by the fourth reactor 18.

The cycle following the third cycle is the same as the first cycle previously described.

The capacity of the reactors can be changed according to the requirements, also according to the total number of the reactors. In particular, by increasing the number of reactors it is possible to:
- increase the productivity for the same heat exchange time (time 3), while maintaining the same capacity of the reactors; or
- decrease the capacity of the reactors, while maintaining the same productivity.

Besides, variants can be provided which are to be considered as included in the scope of the invention as defined by the following claims. For example, it is possible to add a compressor to restore the pressure of the expansion vessel, in case of pressure loss.

Moreover, depending on the moisture content of the biomass, it may be necessary to add water or recirculate partially or totally the liquid formed downstream of the process.

According to a variant of the invention, the first reactor 12, the second reactor 14 and the third reactor 16 as previously described can be replaced by tanks with consequent cost savings.

In that case, the expulsion of the process products, transferred from the reactor to the tank through the exchanger, takes place by exploiting the pressure drop between the reactor and the atmosphere, passing the process products through a suitable diaphragm.

Besides, it is necessary to activate the compressor to maintain the nominal pressure throughout the cycle time as the pressure is discharged in the passage through the diaphragm.

## Claims

1. Process to transform biomass into hydrochar by means of a plant (10) comprising:
- a first reactor (12), a second reactor (14), a third reactor (16) into which feedstock can be loaded from the outside and the process products can be unloaded from the plant (10) to the outside;
- a fourth reactor (18), a fifth reactor (20) and a sixth reactor (22) in which the transformation of biomass into hydrochar can take place at a process temperature between 180°C and 250°C, at a process pressure corresponding or higher than the vapor tension of water at the process temperature, namely between 15 bar and 30 bar, in a time span equal to the reaction time between 3 and 8 hours;
- a heat exchanger (24) through which the first reactor (12), the second reactor (14), the third reactor (16) are indistinctly connected to the fourth reactor (18), the fifth reactor (20) and the sixth reactor (22);
- the first reactor (12), the second reactor (14), the third reactor (16), the fourth reactor (18), the fifth reactor (20) and the sixth reactor (22) being connected to one another also directly; the process providing at the initial state that:
- the first reactor (12) is full of process products, is pressurized at the process pressure and at an unloading temperature between 30°C and 50°C;
- the second reactor (14) is full of feedstock and is pressurized at the process pressure;
- the third reactor (16) is empty and is pressurized at the process pressure;
- the fourth reactor (18) is full of process products, is pressurized at the process pressure and is at a reaction temperature;
- the fifth reactor (20) is empty and is pressurized at a process pressure;
- the sixth reactor (22) is full of feedstock, is pressurized at the process temperature and is partially heated at a temperature between 160°C and 210°C; the process providing a first cycle in which, simultaneously:
- the first reactor (12), in succession, is isolated from the rest of the plant (10), is depressurized at the atmospheric pressure, is emptied of the process products contained in it, is loaded with feedstock, and is, finally, pressurized at the process pressure;
- the process products contained in the fourth reactor (18) are transferred into the third reactor (16) passing through the heat exchanger (24) in countercurrent with the feedstock passing through the heat exchanger (24) which is transferred from the second reactor (14) to the fifth reactor (20), so as to transfer heat from the process products to the feedstock;
- the air contained in the third reactor (16) and the fifth reactor (20) is transferred into the second reactor (14) and the fourth reactor (18), respectively;
- in the sixth reactor (22), the feedstock is brought to the reaction temperature, and the reaction as well as the transformation into process products take place.

2. Process according to the preceding claim, wherein at the end of the first cycle, a second cycle is performed in which, simultaneously, the operation of the first reactor (12) during the first cycle is performed by the third reactor (16), the operation of the second reactor (14) during the first cycle is performed by the first reactor (12), the operation of the third reactor (16) during the first cycle is performed by the second reactor (14), the operation of the fourth reactor (18) during the first cycle is performed by the sixth reactor (22), the operation of the fifth reactor (20) during the first cycle is performed by the fourth reactor (18) and the operation of the sixth reactor (22) during the first cycle is performed by the fifth reactor (20).

3. Process according to the preceding claim, wherein at the end of the second cycle, a third cycle is performed in which, simultaneously, the operation of the first reactor (12) during the first cycle is performed by the second reactor (14), the operation of the second reactor (14) during the first cycle is performed by the third reactor (16), the operation of the third reactor (16) during the first cycle is performed by the first reactor (12), the operation of the fourth reactor (18) during the first cycle is performed by the fifth reactor (20), the operation of the fifth reactor (20) during the first cycle is performed by the sixth reactor (22) and the operation of the sixth reactor (22) during the first cycle is performed by the fourth reactor (18).

4. Process according to one of the preceding claims, wherein the changes in level within the plant are managed by means of an expansion vessel (26).

5. Process according to one of the preceding claims, wherein water is added to the biomass, or liquid formed downstream of the process is re-circulated partially or totally in the biomass.

6. Plant (10) to transform biomass into hydrochar, comprising:
a first reactor (12), a second reactor (14), a third reactor (16) into which feedstock is loaded from the outside and the process products are unloaded from the plant (10) to the outside;
a fourth reactor (18), a fifth reactor (20) and a sixth reactor (22) in which the transformation of biomass into hydrochar takes place at a process temperature between 180°C and 250°C, at a process pressure corresponding or higher than the vapor tension of water at the process temperature, namely between 10 bar and 50 bar, in a time span equal to the reaction time between 3 and 8 hours;
a heat exchanger (24) through which the first reactor (12), the second reactor (14), the third reactor (16) are indistinctly connected to the fourth reactor (18), the fifth reactor (20) and the sixth reactor (22);
the first reactor (12), the second reactor (14), the third reactor (16), the fourth reactor (18), the fifth reactor (20) and the sixth reactor (22) being connected also directly to one another;

7. Plant (10) according to the preceding claim, wherein a loading/unloading pump (30) is comprised and is adapted to load feedstock or unload the process products into/from at least one of the first reactor (12), the second reactor (14), the third reactor (16), the fourth reactor (18), the fifth reactor (20) and the sixth reactor (22).

8. Plant (10) according to claim 5 or 6, wherein a feed pump (32) is comprised and is adapted to perform the pressurization in at least one of the first reactor (12), the second reactor (14), the third reactor (16), the fourth reactor (18), the fifth reactor (20) and the sixth reactor (22).

9. Plant (10) according to one of the preceding claims 5 to 7, wherein an expansion vessel (26) is comprised and is adapted to manage level changes within the plant.

10. Plant (10) according to one of the preceding claims 5 to 8, wherein at least one of the first reactor (12), the second reactor (14), the third reactor (16) is a tank.

## Patentansprüche

1. Verfahren zur Umwandlung von Biomasse in Hydrokohle mittels einer Anlage (10), umfassend:
- einen ersten Reaktor (12), einen zweiten Reaktor (14), einen dritten Reaktor (16), in den von außen Rohstoffe geladen und die Verfahrensprodukte aus der Anlage (10) nach außen entladen werden können;
- einen vierten Reaktor (18), einen fünften Reaktor (20) und einen sechsten Reaktor (22), in denen die Umwandlung von Biomasse in Hydrokohle bei einer Verfahrenstemperatur zwischen 180 °C und 250 °C, bei einem Verfahrensdruck, der dem Dampfdruck von Wasser bei der Verfahrenstemperatur entspricht oder höher ist, nämlich zwischen 15 bar und 30 bar, in einer Zeitspanne, die der Reaktionszeit zwischen 3 und 8 Stunden entspricht, stattfinden kann;
- einen Wärmetauscher (24), durch den der erste Reaktor (12), der zweite Reaktor (14) und der dritte Reaktor (16) unlösbar mit dem vierten Reaktor (18), dem fünften Reaktor (20) und dem sechsten Reaktor (22) verbunden sind;
- der erste Reaktor (12), der zweite Reaktor (14), der dritte Reaktor (16), der vierte Reaktor (18), der fünfte Reaktor (20) und der sechste Reaktor (22) auch direkt miteinander verbunden sind;
das Verfahren im Ausgangszustand bereitstellt, dass:
- der erste Reaktor (12) mit Verfahrensprodukten gefüllt ist, unter dem Verfahrensdruck und bei einer Entladetemperatur zwischen 30 °C und 50 °C steht;
- der zweite Reaktor (14) mit Rohstoffen gefüllt ist und mit dem Verfahrensdruck beaufschlagt wird;
- der dritte Reaktor (16) ist leer und wird mit dem Verfahrensdruck beaufschlagt;
- der vierte Reaktor (18) ist mit Verfahrensprodukten gefüllt, wird mit dem Verfahrensdruck beaufschlagt und hat eine Reaktionstemperatur;
- der fünfte Reaktor (20) ist leer und wird mit dem Verfahrensdruck beaufschlagt;
- der sechste Reaktor (22) ist mit Rohstoff gefüllt, steht unter dem Verfahrensdruck und wird teilweise auf eine Temperatur zwischen 160 °C und 210 °C erhitzt; das Verfahren stellt einen ersten Zyklus bereit, in dem gleichzeitig:
- der erste Reaktor (12) aufeinanderfolgend vom Rest der Anlage (10) isoliert wird, auf Atmosphärendruck entspannt wird, von den darin enthaltenen Verfahrensprodukten entleert wird, mit Rohstoffen beladen wird und schließlich auf den Verfahrensdruck gebracht wird;
- die im vierten Reaktor (18) enthaltenen Verfahrensprodukte in den dritten Reaktor (16) überführt werden, indem sie den Wärmetauscher (24) im Gegenstrom mit dem den Wärmetauscher (24) durchlaufenden Rohstoff passieren, der vom zweiten Reaktor (14) in den fünften Reaktor (20) überführt wird, sodass die Wärme von den Verfahrensprodukten auf den Rohstoff übertragen wird;
- die im dritten Reaktor (16) und im fünften Reaktor (20) enthaltene Luft wird in den zweiten Reaktor (14) bzw. in den vierten Reaktor (18) geleitet;
- im sechsten Reaktor (22) wird der Rohstoff auf die Reaktionstemperatur gebracht, und die Reaktion sowie die Umwandlung in Verfahrensprodukte erfolgen.

2. Verfahren nach dem vorangehenden Anspruch, wobei am Ende des ersten Zyklus ein zweiter Zyklus durchgeführt wird, bei dem gleichzeitig der Betrieb des ersten Reaktors (12) während des ersten Zyklus durch den dritten Reaktor (16) und der Betrieb des zweiten Reaktors (14) während des ersten Zyklus durch den ersten Reaktor (12) durchgeführt wird, der Betrieb des dritten Reaktors (16) während des ersten Zyklus durch den zweiten Reaktor (14) erfolgt, der Betrieb des vierten Reaktors (18) während des ersten Zyklus durch den sechsten Reaktor (22) erfolgt, der Betrieb des fünften Reaktors (20) während des ersten Zyklus durch den vierten Reaktor (18) erfolgt und der Betrieb des sechsten Reaktors (22) während des ersten Zyklus durch den fünften Reaktor (20) erfolgt.

3. Verfahren nach dem vorangehenden Anspruch, wobei am Ende des zweiten Zyklus ein dritter Zyklus durchgeführt wird, bei dem gleichzeitig der Betrieb des ersten Reaktors (12) während des ersten Zyklus durch den zweiten Reaktor (14) durchgeführt wird, der Betrieb des zweiten Reaktors (14) während des ersten Zyklus durch den dritten Reaktor (16) durchgeführt wird, der Betrieb des dritten Reaktors (16) während des ersten Zyklus durch den ersten Reaktor (12) durchgeführt wird, der Betrieb des vierten Reaktors (18) während des ersten Zyklus durch den fünften Reaktor (20) durchgeführt wird, der Betrieb des fünften Reaktors (20) während des ersten Zyklus durch den sechsten Reaktor (22) durchgeführt wird und der Betrieb des sechsten Reaktors (22) während des ersten Zyklus durch den vierten Reaktor (18) durchgeführt wird.

4. Verfahren nach einem der vorangehenden Ansprüche, wobei die Füllstandsänderungen innerhalb der Anlage mit Hilfe eines Expansionsgefäßes (26) gesteuert werden.

5. Verfahren nach einem der vorangehenden Ansprüche, wobei der Biomasse Wasser zugefügt wird oder stromabwärts gebildete Flüssigkeit teilweise oder vollständig in die Biomasse zurückgeführt wird.

6. Anlage (10) zur Umwandlung von Biomasse in Hydrokohle, umfassend:
einen ersten Reaktor (12), einen zweiten Reaktor (14), einen dritten Reaktor (16), in den der Rohstoff von außen geladen wird und die Verfahrensprodukte aus der Anlage (10) nach außen entladen werden;
einen vierten Reaktor (18), einen fünften Reaktor (20) und einen sechsten Reaktor (22), in denen die Umwandlung von Biomasse in Hydrokohle bei einer Verfahrenstemperatur zwischen 180 °C und 250 °C, bei einem Verfahrensdruck, der dem Dampfdruck von Wasser bei der Verfahrenstemperatur entspricht oder höher ist, nämlich zwischen 10 bar und 50 bar, in einer Zeitspanne, die der Reaktionszeit zwischen 3 und 8 Stunden entspricht, stattfindet;
einen Wärmetauscher (24), durch den der erste Reaktor (12), der zweite Reaktor (14) und der dritte Reaktor (16) unlösbar mit dem vierten Reaktor (18), dem fünften Reaktor (20) und dem sechsten Reaktor (22) verbunden sind;
wobei der erste Reaktor (12), der zweite Reaktor (14), der dritte Reaktor (16), der vierte Reaktor (18), der fünfte Reaktor (20) und der sechste Reaktor (22) auch direkt miteinander verbunden sind;

7. Anlage (10) nach dem vorangehenden Anspruch, wobei eine Be-/Entladepumpe (30) vorgesehen ist, die geeignet ist, Rohstoffe zu laden oder die Verfahrensprodukte in/aus mindestens einem von dem ersten Reaktor (12), dem zweiten Reaktor (14), dem dritten Reaktor (16), dem vierten Reaktor (18), dem fünften Reaktor (20) und dem sechsten Reaktor (22) zu entladen.

8. Anlage (10) nach Anspruch 5 oder 6, wobei eine Zufuhrpumpe (32) umfasst ist, die so angepasst ist, dass sie die Druckbeaufschlagung in mindestens einem von dem ersten Reaktor (12), dem zweiten Reaktor (14), dem dritten Reaktor (16), dem vierten Reaktor (18), dem fünften Reaktor (20) und dem sechsten Reaktor (22) durchführt.

9. Anlage (10) nach einem der vorangehenden Ansprüche 5 bis 7, wobei ein Expansionsgefäß (26) umfasst ist, das geeignet ist, Füllstandsänderungen innerhalb der Anlage zu verwalten.

10. Anlage (10) nach einem der vorangehenden Ansprüche 5 bis 8, wobei mindestens einer der ersten Reaktoren (12), der zweiten Reaktoren (14) und der dritten Reaktoren (16) ein Tank ist.

## Revendications

1. Procédé de transformation de biomasse en hydrochar au moyen d'une installation (10) comprenant :
- un premier réacteur (12), un deuxième réacteur (14), un troisième réacteur (16) dans lesquels la charge d'alimentation peut être chargée depuis l'extérieur et les produits de traitement peuvent être déchargés de l'installation (10) vers l'extérieur ;
- un quatrième réacteur (18), un cinquième réacteur (20) et un sixième réacteur (22) dans lesquels la transformation de la biomasse en hydrochar peut avoir lieu à une température de traitement comprise entre 180 °C et 250 °C, à une pression de traitement correspondant ou supérieure à la tension de vapeur de l'eau à la température de traitement, à savoir entre 15 bar et 30 bar, dans un laps de temps égal au temps de réaction entre 3 et 8 heures ;
- un échangeur de chaleur (24) à travers lequel le premier réacteur (12), le deuxième réacteur (14), le troisième réacteur (16) sont reliés indistinctement au quatrième réacteur (18), au cinquième réacteur (20) et au sixième réacteur (22) ;
- le premier réacteur (12), le deuxième réacteur (14), le troisième réacteur (16), le quatrième réacteur (18), le cinquième réacteur (20) et le sixième réacteur (22) étant reliés l'un à l'autre directement ;
le traitement fournissant à l'état initial que :
- le premier réacteur (12) est rempli de produits de traitement, est mis sous pression à la pression de traitement et à une température de déchargement comprise entre 30 °C et 50 °C ;
- le deuxième réacteur (14) est rempli de charges d'alimentation et est mis sous pression à la pression de traitement ;
- le troisième réacteur (16) est vide et est mis sous pression à la pression de traitement ;
- le quatrième réacteur (18) est rempli de produits de traitement, est mis sous pression à la pression de traitement et est à une température de réaction ;
- le cinquième réacteur (20) est vide et est mis sous pression à une pression de traitement ;
- le sixième réacteur (22) est rempli de charges d'alimentation, est mis sous pression à la température de traitement et est chauffé partiellement à une température comprise entre 160 °C et 210 °C ; le traitement fournissant un premier cycle dans lequel, simultanément :
- le premier réacteur (12), successivement, est isolé du reste de l'installation (10), est mis en dépression à la pression atmosphérique, est vidé des produits de traitement contenus dans celui-ci, est chargé de charge d'alimentation, et est enfin mis sous pression à la pression de traitement ;
- les produits de traitement contenus dans le quatrième réacteur (18) sont transférés dans le troisième réacteur (16) traversant l'échangeur de chaleur (24) en contre-courant avec la charge d'alimentation passant à travers l'échangeur de chaleur (24) qui est transféré du deuxième réacteur (14) vers le cinquième réacteur (20), de manière à transférer la chaleur des produits de traitement vers la charge d'alimentation ;
- l'air contenu dans le troisième réacteur (16) et le cinquième réacteur (20) est transféré dans le deuxième réacteur (14) et le quatrième réacteur (18), respectivement ;
- dans le sixième réacteur (22), la charge d'alimentation est amenée à la température de réaction, et la réaction ainsi que la transformation en produits de procédé de traitement ont lieu.

2. Procédé selon la revendication précédente, dans lequel à la fin du premier cycle, un deuxième cycle est effectué dans lequel, simultanément, le fonctionnement du premier réacteur (12) pendant le premier cycle est effectué par le troisième réacteur (16), le fonctionnement du deuxième réacteur (14) pendant le premier cycle est effectué par le premier réacteur (12), le fonctionnement du troisième réacteur (16) pendant le premier cycle est effectué par le deuxième réacteur (14), le fonctionnement du quatrième réacteur (18) pendant le premier cycle est effectué par le sixième réacteur (22), le fonctionnement du cinquième réacteur (20) pendant le premier cycle est effectué par le quatrième réacteur (18) et le fonctionnement du sixième réacteur (22) pendant le premier cycle est effectué par le cinquième réacteur (20).

3. Procédé selon la revendication précédente, dans lequel à la fin du deuxième cycle, un troisième cycle est effectué dans lequel, simultanément, le fonctionnement du premier réacteur (12) pendant le premier cycle est effectué par le deuxième réacteur (14), le fonctionnement du deuxième réacteur (14) pendant le premier cycle est effectué par le troisième réacteur (16), le fonctionnement du troisième réacteur (16) pendant le premier cycle est effectué par le premier réacteur (12), le fonctionnement du quatrième réacteur (18) pendant le premier cycle est effectué par le cinquième réacteur (20), le fonctionnement du cinquième réacteur (20) pendant le premier cycle est effectué par le sixième réacteur (22) et le fonctionnement du sixième réacteur (22) pendant le premier cycle est effectué par le quatrième réacteur (18).

4. Procédé selon l'une des revendications précédentes, dans lequel les changements de niveau au sein de la plante sont gérés au moyen d'un vase d'expansion (26).

5. Procédé selon l'une des revendications précédentes, dans lequel de l'eau est ajoutée à la biomasse, ou un liquide formé en aval du traitement est remis en circulation partiellement ou totalement dans la biomasse.

6. Station (10) pour transformer la biomasse en hydrochar, comprenant :
un premier réacteur (12), un deuxième réacteur (14), un troisième réacteur (16) dans lesquels la charge d'alimentation est chargée depuis l'extérieur et les produits de traitement sont déchargés de l'installation (10) vers l'extérieur ;
un quatrième réacteur (18), un cinquième réacteur (20) et un sixième réacteur (22) dans lesquels la transformation de la biomasse en hydrochar a lieu à une température de procédé comprise entre 180 °C et 250 °C, à une pression de traitement correspondant ou supérieure à la tension de vapeur de l'eau à la température de traitement, à savoir entre 10 bars et 50 bars, dans un laps de temps égal au temps de réaction entre 3 et 8 heures ;
un échangeur de chaleur (24) à travers lequel le premier réacteur (12), le deuxième réacteur (14), le troisième réacteur (16) sont reliés indistinctement au quatrième réacteur (18), au cinquième réacteur (20) et au sixième réacteur (22) ;
le premier réacteur (12), le deuxième réacteur (14), le troisième réacteur (16), le quatrième réacteur (18), le cinquième réacteur (20) et le sixième réacteur (22) étant reliés également directement l'un à l'autre ;

7. Installation (10) selon la revendication précédente, dans laquelle une pompe de chargement/déchargement (30) est comprise et est conçue pour charger la charge d'alimentation ou décharger les produits de traitement dans/à partir d'au moins l'un du premier réacteur (12), du deuxième réacteur (14), du troisième réacteur (16), du quatrième réacteur (18), du cinquième réacteur (20) et du sixième réacteur (22).

8. Installation (10) selon la revendication 5 ou 6, dans laquelle une pompe d'alimentation (32) est comprise et est conçue pour effectuer la mise sous pression dans au moins l'un parmi le premier réacteur (12), le deuxième réacteur (14), le troisième réacteur (16), le quatrième réacteur (18), le cinquième réacteur (20) et le sixième réacteur (22).

9. Installation (10) selon l'une des revendications 5 à 7 précédentes, dans laquelle un vase d'expansion (26) est compris et est conçu pour gérer des changements de niveau au sein de l'installation.

10. Installation (10) selon l'une des revendications 5 à 8 précédentes, dans laquelle au moins l'un parmi le premier réacteur (12), le deuxième réacteur (14), le troisième réacteur (16) est un réservoir.
